# FASCICULE DE BREVET EUROPEEN

(11) **EP 0 596 778 B1**
(45) Date de publication et mention de la délivrance du brevet: **06.10.1999**
(21) Numéro de dépôt: 93402648.5
(22) Date de dépôt: 28.10.1993
(51) Int. Cl.: H01M 10/50

(54) **Batterie d'accumulateurs monobloc munie d'un dispositif de refroidissement**
Einteilige Akkumulatorenbatterie mit Kühlungseinrichtung
One-piece accumulators battery having a cooling device

(30) Priorité: 02.11.1992 FR 9213087
(43) Date de publication de la demande: 11.05.1994
(73) Titulaire: ALCATEL, 75008 Paris (FR)
(72) Inventeur: Grivel, Tristan, F-33000 Bordeaux (FR); Gilabert, Claude, F-33290 Le Pian-Medoc (FR); Bonnaud, Francis, F-33240 Salignac (FR)
(74) Mandataire: Laroche, Danièle

(56) Documents cités:
- DE-A- 2 635 427
- DE-U- 9 002 249
- DE-U- 9 210 384

## Description

La présente invention concerne une batterie d'accumulateurs monobloc munie d'un dispositif de refroidissement.

On sait que les différents états d'utilisation d'une batterie d'accumulateurs (charge, surcharge, décharge) conduisent à des élévations de la température qui modifient ses performances. Ainsi une batterie d'accumulateurs Nickel-Cadmium 6 volts-100 Ah dégage au cours d'une décharge à 100 Ampères environ 450kjoules.

Ceci présente des inconvénients :
- Si on recharge à chaud cette batterie, la capacité chargée est inférieure à la capacité stockable à la température ambiante.
- Le maintien à une température élevée risque d'entraîner une dégradation des séparateurs, et par conséquent une diminution de la durée de vie de la batterie.
- Lorsque plusieurs batteries monoblocs sont associées en série ou en parallèle, et que leurs températures sont différentes, on aboutit à une énergie de décharge alignée sur les performances les plus faibles et un risque d'inversion en fin de décharge. Il convient donc d'homogénéiser les températures de toutes les batteries ainsi regroupées. Un problème de ce genre se pose en particulier pour l'alimentation des véhicules électriques.

Le moyen le plus couramment utilisé jusqu'à présent est une circulation d'air entre les batteries monoblocs. Dans le cas d'un véhicule électrique où les batteries sont disposées en différents endroits pour des questions de masse et de place disponible, il est extrêmement difficile d'assurer par ce moyen une homogénéisation correcte de la température. L'efficacité du refroidissement n'est pas bonne. Il faut écarter notablement les batteries monoblocs les unes des autres pour assurer la circulation de l'air, et ceci accroît l'encombrement.

On a proposé aussi d'accoler, au moins sur deux faces opposées de la batterie monobloc des récipients métalliques parallélépipédiques où circule un liquide de refroidissement, tel que l'eau. On a constaté qu'une telle installation était encore trop encombrante et n'assurait pas une évacuation suffisante de la chaleur.

Le document DE-U-9 002 249.1 décrit un dispositif de refroidissement par un fluide en circulation constitué d'une double paroi métallique enfermant une tôle intermédiaire ondulée. La circulation du fluide s'effectue dans les canaux formés par la tôle ondulée reliés par des collecteurs à chaque extrémité du dispositif. La circulation du fluide dans une seule direction crée une hétérogénéité thermique.

La présente invention a pour but de réaliser une batterie monobloc muni d'un dispositif de refroidissement efficace et peu encombrant, particulièrement bien adapté au cas où un grand nombre de batteries monoblocs sont associées en parallèle ou en série.

La présente invention a pour objet une batterie d'accumulateurs comprenant un boîtier comportant deux parois longitudinales opposées, munie d'un dispositif de refroidissement par un fluide en circulation coopérant avec lesdites parois, caractérisée par le fait que ladite batterie est un monobloc dont ledit boîtier est en matière plastique et constitué d'un bac et d'un couvercle thermosoudés et que ledit dispositif de refroidissement comporte
- deux flasques en matière plastique thermosoudés de manière étanche respectivement auxdites parois dudit bac, chacun des flasques définissant avec la paroi correspondante un compartiment de circulation pour ledit fluide,
- un orifice à la partie supérieure dudit compartiment, pour l'entrée dudit fluide,
- une pluralité de nervures portées par ladite paroi et/ou ledit flasque, lesdites nervures formant des chicanes pour la circulation dudit fluide dans ledit compartiment alternativement dans une direction et dans la direction opposée, et
- un orifice à la partie supérieure dudit compartiment, pour la sortie dudit fluide.

Afin d'améliorer encore l'évacuation de la chaleur, on peut choisir pour les parois du bac portant les flasques des parois plus minces que les parois habituelles ; la rigidité mécanique du boîtier est alors assurée par les flasques eux-mêmes auxquels on peut donner l'épaisseur adaptée à cette fonction.

De préférence, les nervures se trouvent thermosoudées au flasque/ou à la paroi au cours de l'opération de thermosoudure du flasque avec la paroi.

La soudure des nervures limite la déformation du flasque sous l'effet de la pression du fluide en circulation.

Les nervures peuvent être verticales ou inclinées.

De préférence, on prévoit pour les nervures qui partent du haut dudit compartiment, un espace de l'ordre de 1mm à 3mm entre leur extrémité et le haut dudit compartiment pour permettre l'évacuation des bulles de gaz.

Les flasques peuvent être thermosoudés au couvercle en même temps que le bac. Les matières plastiques utilisables peuvent être choisies parmi le polypropylène, les copolymères de polypropylène, par exemple l'ABS.

Selon un mode de réalisation préférentiel, une boîte à eau est interposée entre chaque orifice d'entrée ou de sortie et le compartiment de circulation.

Cette boîte à eau peut être intégrée au flasque thermosoudé, ou être intégrée au bac, sur la paroi longitudinale portant le flasque ou sur la paroi latérale adjacente à celle qui porte le flasque.

Pour des raisons d'encombrement, il est préférable que lesdits orifices d'entrée et de sortie du fluide soient situés dans le couvercle. Ce dernier porte alors des tétines sur lesquelles peuvent être branchés des tuyaux d'alimentation en fluide.

D'autres caractéristiques et avantages de la présente invention apparaîtront au cours de la description suivante de modes de réalisation donnés à titre illustratif mais nullement limitatif. Dans le dessin annexé :
- La figure 1 est une vue schématique en élévation longitudinale d'une batterie selon l'invention.
- La figure 2 est une vue schématique en élévation latérale de la batterie de la figure 1.
- La figure 3 montre schématiquement, en vue longitudinale arrachée, la structure des chicanes à l'intérieur d'un compartiment de circulation de fluide appartenant à une batterie selon l'invention.
- Les figures 4A et 4B sont des vues schématiques partielles respectivement en coupe et en vue de dessus d'une variante de batterie selon l'invention.
- Les figures 5A et 5B sont analogues aux figures 4A et 4B pour une autre variante de batterie selon l'invention.
- Les figures 6 et 7 sont des vues de dessus schématiques de deux variantes de batterie selon l'invention.
- Les figures 8, 9, 10 sont des vues partielles en perspective montrant plus en détail trois variantes de dispositif de refroidissement selon l'invention.

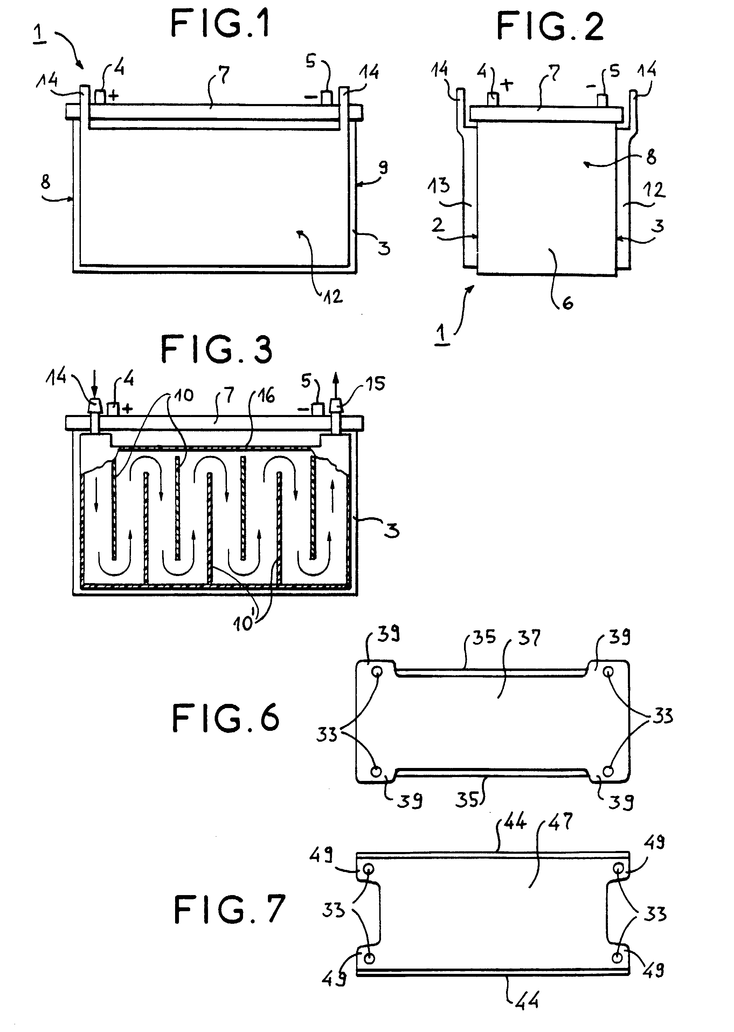

On voit dans les figures 1 et 2 une batterie d'accumulateurs monobloc 1 selon l'invention. Il peut s'agir notamment d'une batterie d'accumulateurs au plomb, nickel-cadmium, nickel-métal hydrure, nickel-zinc. Son boîtier en matière plastique est constitué d'un bac 6 et d'un couvercle 7 thermosoudés. On a référencé les parois longitudinales 2 et 3, les parois latérales 8 et 9, et les bornes 4 et 5.

Selon l'invention, on thermosoude de manière étanche sur les parois longitudinales 2 et 3 deux flasques 12 et 13 en matière plastique qui définissent avec les parois correspondantes des compartiments de circulation de fluide. On a référencé 14 des orifices d'entrée et de sortie pour le fluide à la partie supérieure des compartiments. Le fluide est par exemple un mélange d'eau et d'éthylène glycol à raison de 20 % à 35 % d'éthylène glycol en masse. Le débit est par exemple de l'ordre de quelques dizaines de litres à l'heure.

Afin de rendre encore plus efficace le refroidissement on prévoit (cf figure 3) que les parois 2 et 3 de la batterie comportent une série de quatre nervures 10 et de trois nervures 10' qui sont également thermosoudées à la flasque 12 et qui définissent des chicanes pour la circulation du fluide, comme indiqué par les flèches.

Les nervures 10' partent du fond du compartiment. Par contre les nervures 10 ne sont pas au contact du bord supérieur 16 du compartiment, mais en sont décalées de lmm à 3mm, de manière à permettre l'échappement de bulles de gaz, sans perturber l'écoulement du fluide de refroidissement.

Les nervures ont en outre l'avantage de rigidifier les flasques et d'éviter leur déformation sous l'effet de la pression du fluide indispensable à la circulation.

Le nombre des nervures et leur inclinaison peuvent être choisis en fonction des caractéristiques souhaitées pour l'écoulement du fluide.

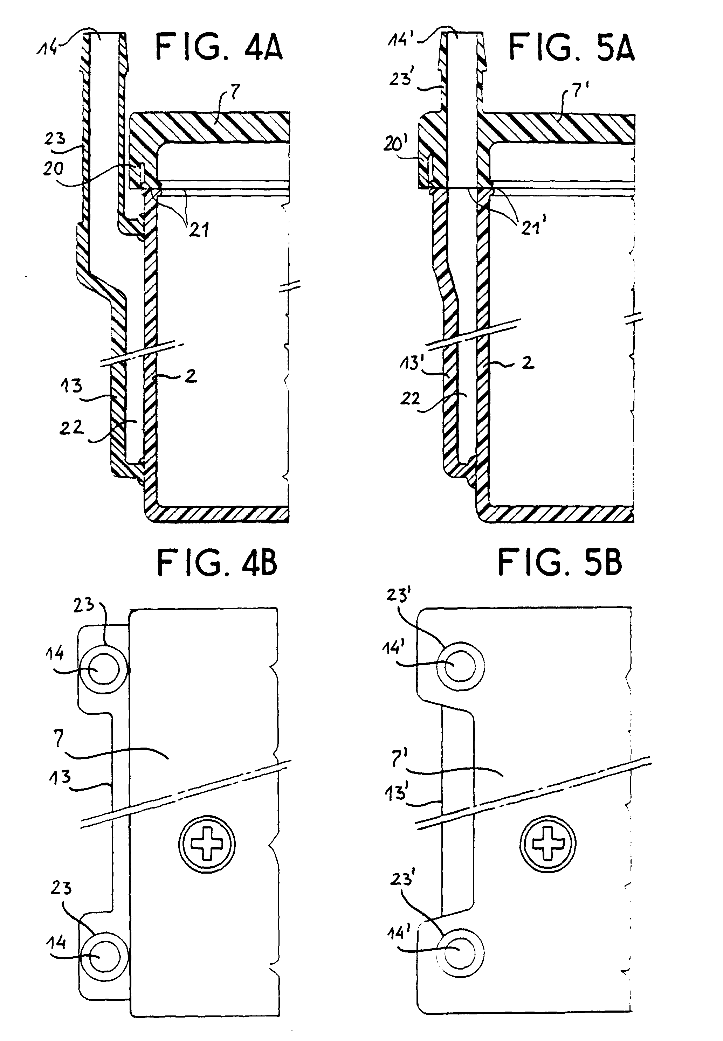

On retrouve plus en détail dans les figures 4A et 4B la paroi 2 du bac et le couvercle 7 thermosoudés. Le cordon de soudure 21 est caché par un rebord 20 du couvercle qui crée une surépaisseur, par exemple de 2,5mm, par rapport à la face externe de la paroi 2, cette dernière ayant elle-même une épaisseur de 2mm. Le flasque 13 d'épaisseur 2,5mm définit un compartiment 22 d'épaisseur 3mm. Au niveau de l'orifice 14, le flasque 13 est prolongé par une tétine 23 de diamètre intérieur 5 mm et créant vis-à-vis de la face interne de la paroi 2 une surépaisseur de 13,5 mm.

Dans les figures 5A et 5B, on retrouve la paroi 2 et un couvercle 7' associés à un flasque 13'. Le flasque 13' et la paroi 2 sont thermosoudés simultanément au couvercle 7' suivant un cordon de soudure 21' caché par un rebord 20' du couvercle. L'orifice 14' et la tétine 23' appartiennent alors au couvercle 7'. Dans ce cas la surépaisseur créée vis-à-vis de la face interne de la paroi 2 n'est que de 12mm.

Selon un autre mode de réalisation, on peut réduire ou supprimer le rebord 20 ou 20'.

Si l'on tient compte de l'épaisseur du tuyau d'alimentation en fluide branché sur les tétines 23 et 23', on observe qu'elle n'accroît en rien la surépaisseur globale dans le cas de la variante des figures 5A et 5B, alors qu'elle l'accroît dans le cas de la variante des figures 4A et 4B.

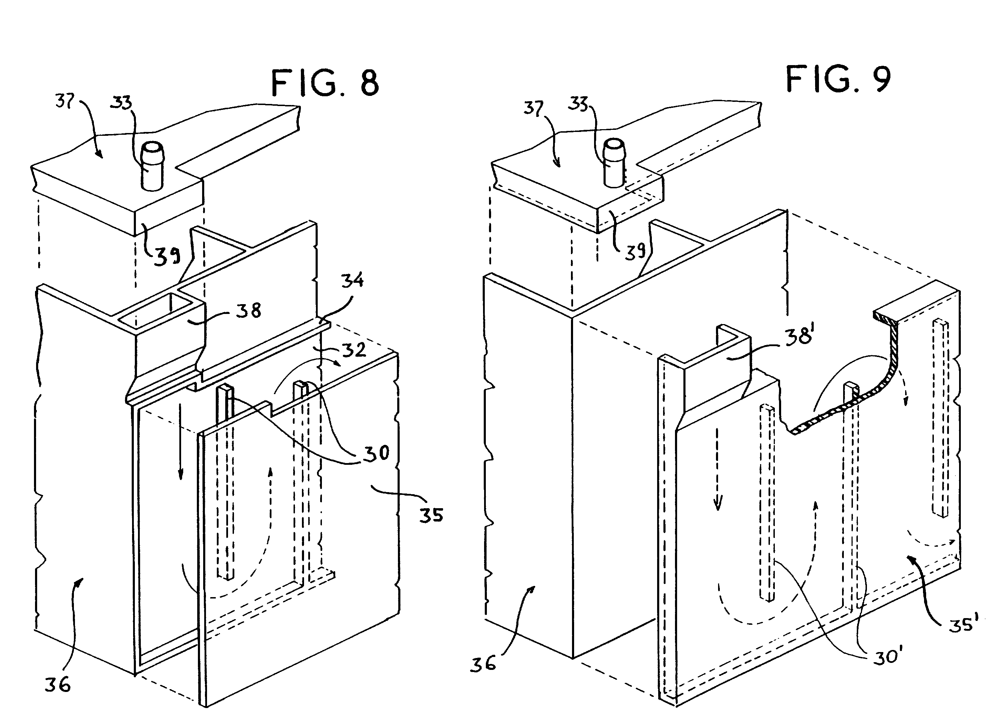

Les figures 8, 9 et 10 illustrent trois variantes de dispositif de refroidissement où la tétine est incorporée au couvercle de la batterie.

On voit dans la figure 8 un bac de batterie monobloc 36 avec une paroi longitudinale 32 muni de nervures 30 et d'un rebord 34 sur lesquels est thermosoudé un flasque 35. Une boîte à eau 38 communiquant avec le compartiment défini par la paroi 32 et le flasque 35 est intégrée par moulage à la partie supérieure du bac 36. Le couvercle 37 présente un décrochement 39 portant une tétine 33 et venant au droit de la boîte à eau 38 ; l'ensemble est thermosoudé de manière étanche.

Dans le cas de la figure 9, la boîte à eau 38' ne fait plus partie intégrante du bac 36, mais du flasque 35' rapporté et thermosoudé, portant lui-même des nervures 30'.

Les variantes des figures 8 et 9 apparaissent en vue de dessus dans la figure 6.

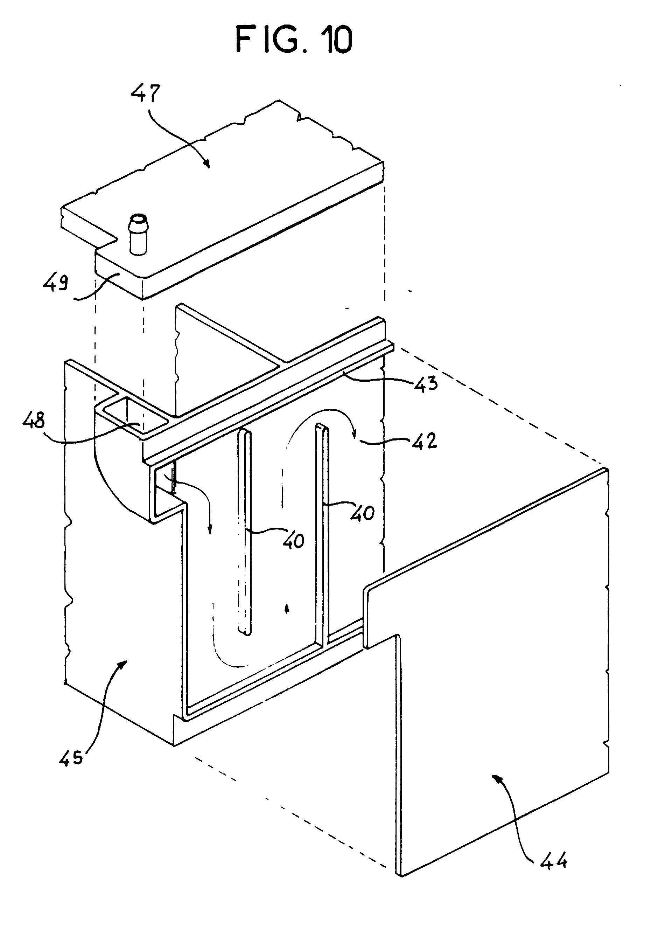

Dans la variante de la figure 10, qui apparaît en vue de dessus dans la figure 7, on a référencé la paroi longitudinale 42 et ses nervures 40 destinées à recevoir un flasque 44. Le bord de thermosoudure est référencé 43.

La boîte à eau 48 qui communique avec le compartiment de circulation n'est plus située, comme dans la figure 8 sur la paroi longitudinale 42 du bac, mais sur la paroi latérale adjacente 45. Le couvercle 47 présente alors un décrochement 49 venant recouvrir la boîte à eau 48.

## Revendications

1. Batterie d'accumulateurs comprenant un boîtier comportant deux parois longitudinales opposées (2, 3), munie d'un dispositif de refroidissement par un fluide en circulation coopérant avec lesdites parois, caractérisée par le fait que ladite batterie est un monobloc dont ledit boîtier est en matière plastique et constitué d'un bac (6) et d'un couvercle (7) thermosoudés et que ledit dispositif de refroidissement comporte
- deux flasques (12, 13) en matière plastique thermosoudés de manière étanche respectivement auxdites parois (2, 3) dudit bac (6), chacun des flasques (12, 13) définissant avec la paroi (2, 3) correspondante un compartiment de circulation pour ledit fluide,
- un orifice (14) à la partie supérieure dudit compartiment, pour l'entrée dudit fluide,
- une pluralité de nervures (10, 10') portées par ladite paroi (2, 3) et/ou ledit flasque (12, 13), lesdites nervures formant des chicanes pour la circulation dudit fluide dans ledit compartiment alternativement dans une direction et dans la direction opposée, et
- un orifice (14) à la partie supérieure dudit compartiment, pour la sortie dudit fluide.

2. Batterie d'accumulateurs selon la revendication 1., caractérisée par le fait que, pour lesdites nervures partant du haut dudit compartiment, on prévoit entre leur extrémité et le haut dudit compartiment un espace de l'ordre de 1 à 3 mm destiné à l'évacuation des bulles de gaz.

3. Batterie d'accumulateurs selon l'une des revendications 1. et 2., caractérisée par le fait que lesdits orifices d'entrée et de sortie du fluide sont situés dans ledit couvercle.

4. Batterie d'accumulateurs selon la revendication 3., caractérisée par le fait que lesdits flasques et ledit bac sont thermosoudés audit couvercle en même temps.

5. Batterie d'accumulateurs selon la revendication 3., caractérisée par le fait qu'une boîte à eau est interposée entre chacun desdits orifices et ledit compartiment.

6. Batterie d'accumulateurs selon la revendication 5., caractérisée par le fait que ladite boîte à eau est intégrée dans ledit flasque.

7. Batterie d'accumulateurs selon la revendication 5., caractérisée par le fait que ladite boîte à eau est intégrée dans la partie supérieure dudit bac sur la même paroi que ledit flasque.

8. Batterie d'accumulateurs selon la revendication 5., caractérisée par le fait que ladite boîte à eau est intégrée dans la partie supérieure d'une paroi latérale dudit bac adjacente à celle sur laquelle se trouve ledit flasque.

## Patentansprüche

1. Akkumulatorenbatterie mit einem Gehäuse, das zwei gegenüberliegende Längswände (2, 3) umfaßt, das mit einer Vorrichtung zum Kühlen durch ein zirkulierendes Fluid versehen ist, die mit den Wänden zusammenwirkt, dadurch gekennzeichnet, daß die Batterie aus einem Stück besteht, wobei ihr Gehäuse aus einem Plastikmaterial besteht und sich aus einem Behälter (6) und einem Deckel (7) zusammensetzt, die heißverschweißt sind, und daß die Kühleinrichtung umfaßt:
- zwei Seitenwangen (12, 13) aus Plastikmaterial, die jeweils dicht mit den Wänden (2, 3) des Behälters (6) heißverschweißt sind, wobei jede Seitenwange (12, 13) mit der entsprechenden Wand (2, 3) eine Zirkulationskammer für das Fluid definiert,
- eine Öffnung (14) im oberen Bereich der Kammer für den Eintritt des Fluids,
- eine Mehrzahl von Rippen (10, 10'), die durch die Seitenwand (2, 3) und/oder die Seitenwange (12, 13) getragen sind, wobei die Rippen Schikanen für die Zirkulation des Fluids in der Kammer abwechselnd in die eine und in die andere Richtung bilden, und
- eine Öffnung (14) im oberen Teil der Kammer für den Austritt des Fluids.

2. Akkumulatorenbatterie nach Anspruch 1, dadurch gekennzeichnet, daß bei den von der Oberseite der Kammer ausgehenden Rippen zwischen ihrem Ende und der Oberseite der Kammer ein Freiraum in der Größenordnung von 1-3 mm vorgesehen ist, der zur Abführung der Gasblasen bestimmt ist.

3. Akkumulatorenbatterie nach einem der Ansprüche 1 und 2, dadurch gekennzeichnet, daß die Eintritts- und Austrittsöffnung des Fluids in dem Deckel gelegen sind.

4. Akkumulatorenbatterie nach Anspruch 3, dadurch gekennzeichnet, daß die Seitenwangen und der Behälter gleichzeitig an dem Deckel heißverschweißt sind.

5. Akkumulatorenbatterie nach Anspruch 3, dadurch gekennzeichnet, daß ein Wasserkasten zwischen jeder der Öffnungen und der Kammer angeordnet ist.

6. Akkumulatorenbatterie nach Anspruch 5, dadurch gekennzeichnet, daß der Wasserkasten in die Seitenwange integriert ist.

7. Akkumulatorenbatterie nach Anspruch 5, dadurch gekennzeichnet, daß der Wasserkasten in den oberen Bereich des Behälters an der gleichen Wand wie die Seitenwange integriert ist.

8. Akkumulatorenbatterie nach Anspruch 5, dadurch gekennzeichnet, daß der Wasserkasten in den oberen Bereich einer zu der Wand, an der sich die Seitenwange befindet, benachbarten Seitenwand des Behälters integriert ist.

## Claims

1. A storage cell battery comprising a housing including two opposite longitudinal walls (2, 3), the storage cell battery being equipped with a cooling device that uses a circulating fluid cooperating with said walls, said storage cell battery being characterized by the fact that said battery is a unit having a housing made of plastic and constituted by a case (6) and by a cover (7) heat-sealed thereon, and by the fact that said cooling device includes:
two panels (12, 13) made of plastic and heat-sealed in fluid-tight manner to respective ones of said walls (2, 3) of said case (6), each of the panels (12, 13) co-operating with the corresponding wall (2, 3) to delimit a circulation compartment for said fluid;
an inlet orifice (14) for said fluid at the top of said compartment;
a plurality of ribs (10, 10') carried by said wall (2, 3) and/or said panel (12, 13), said ribs forming baffles to cause said fluid to circulate alternately in one dirction and then in the opposite direction in said compartment; and
an outlet orifice (14) for said fluid at the top of said compartment.

2. A storage cell battery according to claim 1, characterized by the fact that, for each of those of said ribs which extend from the top of said compartment, a space of about 1 mm to about 3 mm is left between the end of the rib and the top of said compartment so as to allow gas bubbles to escape.

3. A storage cell battery according to claim 1 or 2, characterized by the fact that said inlet orifice and said outlet orifice for the fluid are situated in said cover.

4. A storage cell battery according to claim 3, characterized by the fact that said panels and said case are heat-sealed to said cover simultaneously.

5. A storage cell battery according to claim 3, characterized by the fact that a water tank is interposed between each of said orifices and said compartment.

6. A storage cell battery according to claim 5, characterized by the fact that said water tank is integrated into said panel.

7. A storage cell battery according to claim 5, characterized by the fact that said water tank is integrated into the top portion of said case on the same wall as said panel.

8. A storage cell battery according to claim 5, characterized by the fact that said water tank is integrated into the top portion of a lateral wall of said case, which wall is adjacent to the wall on which said panel is situated.
